(19) Europäisches Patentamt
European Patent Office
Office européen des brevets

(11) Veröffentlichungsnummer: **0 065 164**
**A2**

(12) # EUROPÄISCHE PATENTANMELDUNG

(21) Anmeldenummer: **82103736.3**

(22) Anmeldetag: **03.05.82**

(51) Int. Cl.³: **C 09 B 62/026**, D 06 P 3/66

(30) Priorität: **11.05.81 DE 3118657**

(43) Veröffentlichungstag der Anmeldung: **24.11.82**
**Patentblatt 82/47**

(84) Benannte Vertragsstaaten: **CH DE FR GB IT LI**

(71) Anmelder: **BASF Aktiengesellschaft,**
**Carl-Bosch-Strasse 38, D-6700 Ludwigshafen (DE)**

(72) Erfinder: **Schaffer, Ortwin, Dr., Bruesseler Ring 43, D-6700 Ludwigshafen (DE)**
Erfinder: **Krueger, Heinz, Dr., Londoner Ring 4, D-6700 Ludwigshafen (DE)**
Erfinder: **Trautmann, Walter, Dr., Ritterbueschel 87, D-6730 Neustadt (DE)**

(54) **Reaktivfarbstoffe.**

(57) Die Erfindung betrifft Verbindungen der allgemeinen Formel I

$$\left[ HO_3S-Q-CO-\overset{\overset{\displaystyle R}{|}}{N}-\left[A\right]-X-\right]_n B$$

sowie deren Metallkomplexe, wobei

B für n = 1 Fluor oder Chlor und für n = 2 ein Brückenglied,

A der Rest eines Mono- oder Disazofarbstoffes,

n 1 oder 2,

Q gegebenenfalls durch Chlor, Brom, Carboxyl, Methyl oder Phenyl substituiertes Alkylen,

R Wasserstoff oder gegebenenfalls substituiertes Alkyl oder Cycloalkyl und

X ein faserreaktiver Rest der Triazin-, Pyrimidin- oder Chinoxalinreihe sind, mit der Maßgabe, daß X für n = 2 ein Triazinrest ist.

Die erfindungsgemäßen Farbstoffe eignen sich vorzüglich zum Färben hydroxylgruppenhaltiger Fasern.

EP 0 065 164 A2

## Reaktivfarbstoffe

Die Erfindung betrifft Verbindungen der allgemeinen Formel I

$$\left[ HO_3S-Q-CO-\overset{\overset{R}{|}}{N}-\left[ A \right]-X- \right]_n B$$

sowie deren Metallkomplexe, wobei

B für n = 1 Fluor oder Chlor und für n = 2 ein Brückenglied,

A der Rest eines Mono- oder Disazofarbstoffes,

n 1 oder 2,

Q gegebenenfalls durch Chlor, Brom, Carboxyl, Methyl oder Phenyl substituiertes Alkylen,

R Wasserstoff oder gegebenenfalls substituiertes Alkyl oder Cycloalkyl und

X ein faserreaktiver Rest der Triazin-, Pyrimidin- oder Chinoxalinreihe sind, mit der Maßgabe, daß X für n = 2 ein Triazinrest ist.

Reste Q sind im einzelnen beispielsweise $-CH_2-$, $-C_2H_4-$, $-CH_2-\underset{|}{C}HCOOH$, $-CH_2\underset{|}{C}HCH_3$, $-CH_2\underset{|}{C}{<}^{CH_3}_{COOH}$ oder $-\underset{\underset{CH_3}{|}}{C}H-\overset{|}{C}H-COOH$ sowie $-CH_2-\underset{|}{C}H-C_6H_5$.

Bg/P

Reste XB für n = 1 sind beispielsweise

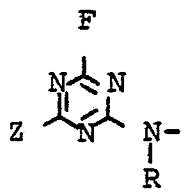 , 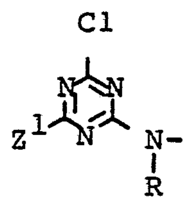 , 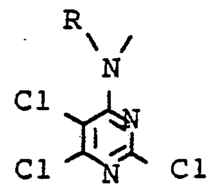 , 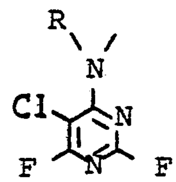

oder 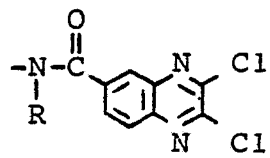 , wobei

R Wasserstoff oder einen gegebenenfalls substituierten Alkyl- oder Cycloalkylrest,

Z einen gegebenenfalls substituierten Alkoxy- oder Aryloxyrest $OR^1$, einen Rest $NH_2$, NHOH, $NHNH_2$, 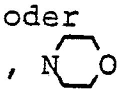, $NHC_2H_4$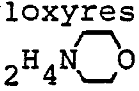, 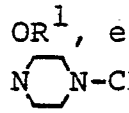-$CH_3$ oder einen gegebenenfalls substituierten Alkyl-, Cycloalkyl- oder Arylaminorest $NHR^2$ oder $N(R^2)_2$ und

$Z^1$ Chlor oder Z bedeuten.

Reste R sind beispielsweise:
$CH_3$, $C_2H_5$, $C_3H_7$, $C_4H_9$, $CH_2COOH$, $CH_2SO_3H$, $C_2H_4OH$, $C_2H_4OCH_3$, $C_2H_4OC_2H_4OC_2H_4OH$, $C_2H_4NH_2$, $C_2H_4NHC_2H_4OH$, $C_2H_4$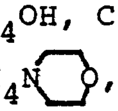, $CH_2$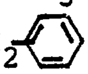, $CH_2CH_2$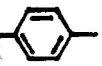$SO_3H$ oder 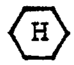.

Reste $R^1$ sind zum Beispiel:
$CH_3$, $C_2H_4OCH_3$, $C_2H_5$, $C_3H_7$, $C_6H_5$ oder $C_6H_4$-tert.but.

Reste $R^2$ sind beispielsweise:
$CH_3$, $C_2H_5$, $C_2H_4OH$, $C_2H_4CN$, $C_2H_4COOH$, $C_2H_4SO_3H$, $C_2H_4OSO_3H$, $C_2H_4NH_2$, $C_2H_4Cl$, $C_3H_7$, $CH_2CHOHCH_3$, $C_2H_4OCH_3$, $C_3H_6OH$, $C_4H_9$, $CH(CH_2OH)C_2H_5$, $C_2H_4OC_2H_5$, $C(CH_2OH)_3$, $C_2H_4OC_2H_4OH$, $C(CH_3)_2CH_2OH$, $C_6H_{10}$, $C_2H_4OC_2H_4OC_2H_4OH$, $(CH_2)_3OC_2H_4OC_2H_4OC_2H_5$, $C_6H_5$, $C_6H_4Cl$, $C_6H_4Br$, $C_6H_4OH$, $C_6H_4CN$, $C_6H_4CH_3$, $C_6H_4OCH_3$, $C_6H_4OC_2H_5$, $C_6H_4COOCH_3$, $C_6H_4SO_2C_3H_5$, $C_6H_4COOC_2H_5$, $C_6H_4NO_2$, $C_6H_4NHCOCH_3$, $C_6H_4CF_3$, $C_6H_4COOH$, $C_6H_4CONH_2$, $C_6H_4SO_3H$, $C_6H_4SO_2NH_2$, $C_6H_4SO_2NHCH_3$, $C_6H_3Cl_2$, $C_6H_3(CH_3)_2$, $C_6H_3CH_3OCH_3$, $C_6H_3ClCH_3$, $C_6H_3ClOCH_3$, $C_6H_3(OCH_3)_2$, $C_6H_3ClSO_3H$, $C_6H_3CH_3SO_3H$, $C_6H_3OCH_3SO_3H$, $C_6H_3OC_2H_5SO_3H$, $C_6H_3SO_3HCOOH$, $C_6H_3(SO_3H)_2$, $C_6H_3NO_2COOH$, $C_6H_3NO_2SO_3H$, $C_6H_3OHSO_3H$, $C_6H_3OHCOOH$, $C_6H_3(COOH)_2$, $C_6H_3NH_2SO_3H$, $C_6H_3SO_3HNHCOCH_3$, $C_{10}H_6SO_3H$, $C_{10}H_5(SO_3H)_2$ oder $C_{10}H_4(SO_3H)_3$.

Brückenglieder B für n = 2 sind beispielsweise:

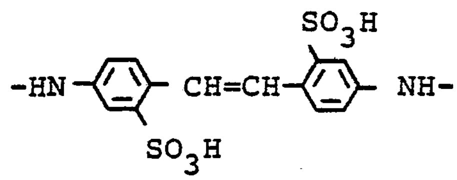,
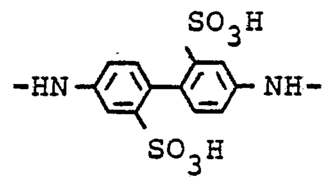,
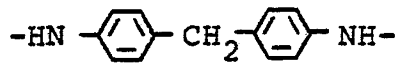,
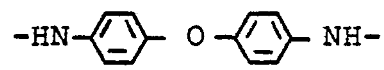,
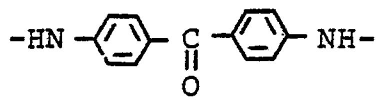,
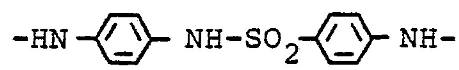,
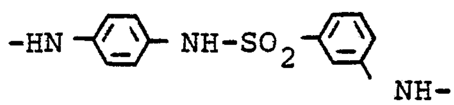,
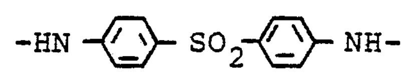,
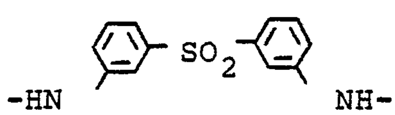,
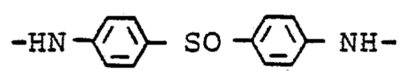,
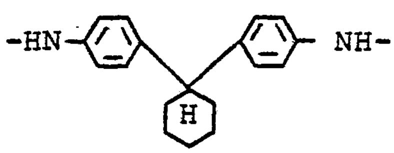,
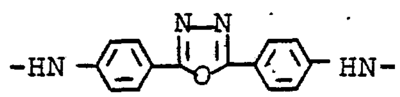,
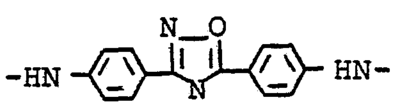,
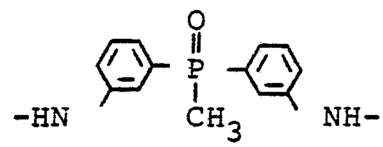,
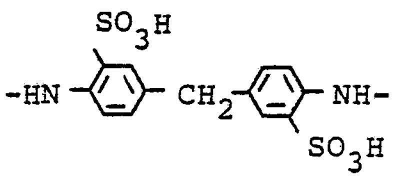,
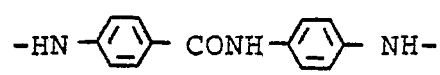,
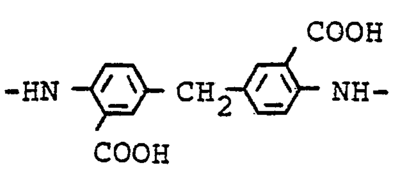,
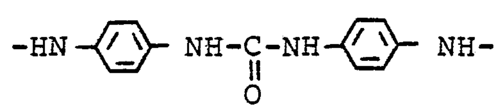,

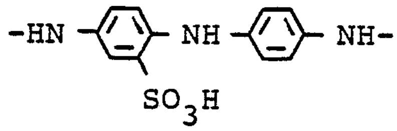, 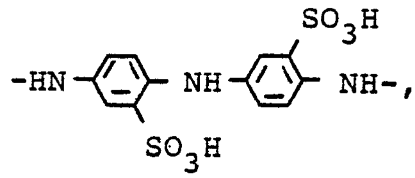,

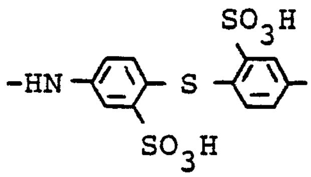, 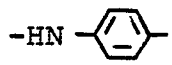, 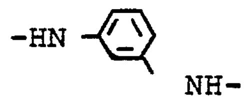,

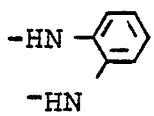, 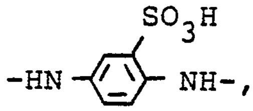, 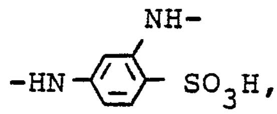, 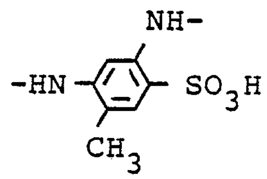,

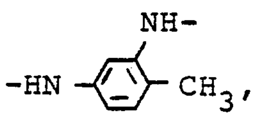, 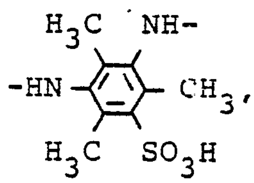, 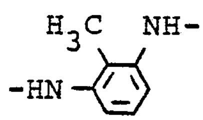, $-HN-CH_2-CH_2-NH-$,

$-HN-CH_2-CH_2-CH_2-NH-$, 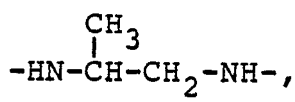, $-HN-NH-$, 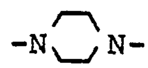,

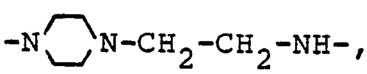, 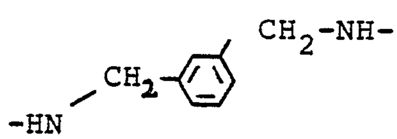,

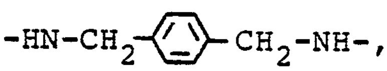, 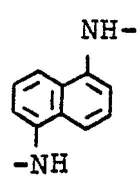 oder 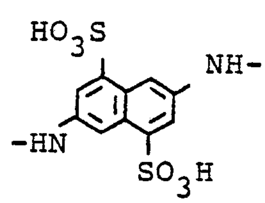 .

Die Reste A entsprechen insbesondere den Formeln

$$D^1{-}N{=}N{-}K^1\lt$$

oder

$$-D^2{-}N{=}N{-}K^2{-}$$

wobei die freien Valenzen den Resten $-\underset{R}{N}CO-Q-SO_3H$ und $-X-B$ zugeordnet sind.

Die Diazokomponenten $D^1NH_2$ stammen vorwiegend aus der Anilin- und Aminonaphthalinreihe und können als Substituenten z.B. Fluor, Chlor, Brom, Methyl, Ethyl, Methoxy, Ethoxy, Cyan, Nitro, Hydroxy, Alkoxycarbonyl, Carboxy, Acylamino und insbesondere Sulfogruppen tragen.

Alkoxycarbonylreste haben vorzugsweise 1 bis 4 C-Atome, im einzelnen seien beispielsweise $COOCH_3$, $COOC_2H_5$, $COOC_3H_7$(n- oder i-), $COOC_4H_9$(n- oder i-) und $COOCH_2CH\lt^{C_2H_5}_{C_4H_9}$ genannt.

Einzelne Acylaminoreste sind z.B. HCONH, $CH_3CONH$, $C_2H_5CONH$, $HO_3S$-Q-CO-NH sowie

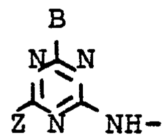

.

Einzelne Diazokomponenten $D^1NH_2$ sind beispielsweise: Anilin, 2-, 3-, oder 4-Toluidin, 2-, 3- oder 4-Sulfoanilin, 2-Sulfo-4-methylanilin, 2-Sulfo-4-chloranilin, 2- oder 3-Sulfo-4-methoxyanilin, 2-Sulfo-3- oder 4-acetaminoanilin, 2-, 3- oder 4-Carboxyanilin, 2- oder 4-Methoxycarbonylanilin, 2- oder 4-Cyananilin, 3,5-Dicarboxyanilin, 2-Sulfo-4-nitroanilin, 2-Carboxy-4- oder 5-sulfoanilin, 2,4-, 2,5- oder 3,5-Disulfoanilin, 1-Naphthylamin, 1-Naphthylamin-4-, 5-, 6- oder 7-sulfonsäure, 1-Naphthylamin-4,7- oder 4,8-disulfonsäure, 1-Naphthylamin-3,6,8- oder 4,6,8-trisulfonsäure, 2-Naphthylamin-1-, 5-, 6-, 7- oder 8-sulfonsäure, 2-Naphthylamin-1,5-, 3,6- oder 4,8-disulfonsäure, 2-Naphthylamin-5,6- oder 6,8-disulfonsäure, 2-Naphthylamin-1,5,7-, 3,6,8- oder 4,6,8-trisulfonsäure oder 2-Sulfo-4-(4'-sulfophenylazo)-anilin.

Die Diazokomponentenreste $D^2$ können sowohl den Rest $-X-B$ als auch den Rest $HO_3S-Q-CONH$ tragen, weiterhin als Substituenten z.B. Chlor, Methyl, Methoxy, Alkoxycarbonyl oder Sulfo.

Einzelne Diazokomponentenreste $-D^2NH_2$ sind z.B.:

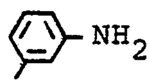, 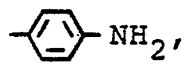, 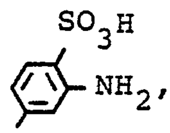, 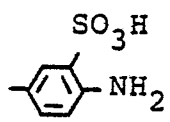, 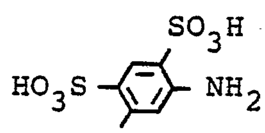,

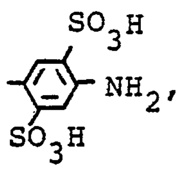, 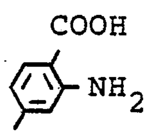, 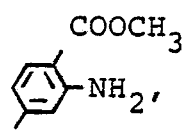, 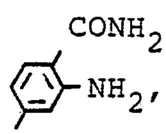, 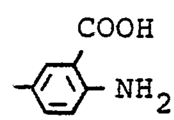,

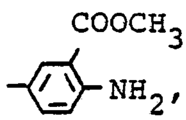, 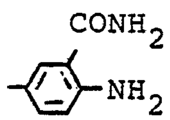, 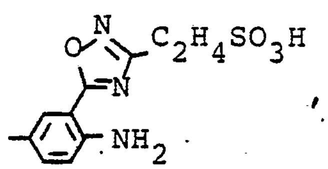,

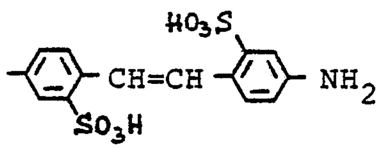, 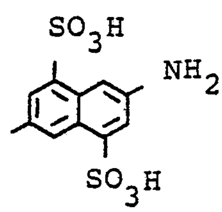, 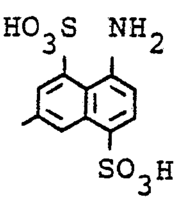,

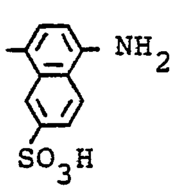, 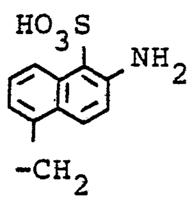, 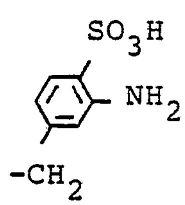 oder 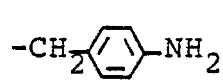.

Kupplungskomponentenreste $K^1$ stammen vorwiegend aus der Anilinreihe, sie entsprechen den Formeln

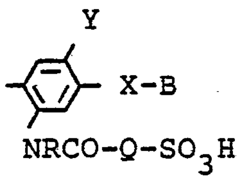 oder 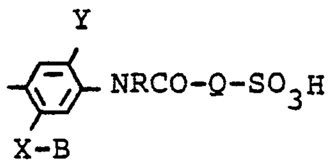

in denen
Y Wasserstoff, Chlor, Methyl, Methoxy oder Alkoxycarbonyl ist und R, Q, X und B die angegebene Bedeutung haben.

Reste $K^2$ stammen vorwiegend aus der Anilin-, Naphthylamin- und vorzugsweise Aminonaphtholreihe. Als Substituenten sind beispielsweise Chlor, Methyl, Methoxy oder Acylamino und insbesondere Sulfo zu nennen.

Einzelne Kupplungskomponentenreste $K^2$ sind z.B.:

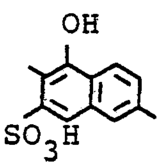 , 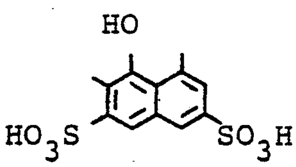 , 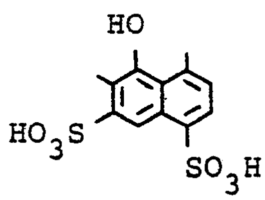 ,

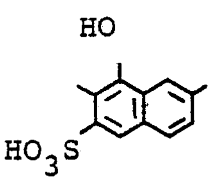 , 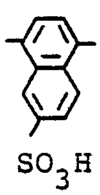 , 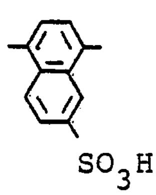 oder

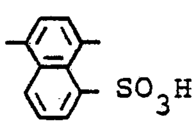 .

Die neuen Farbstoffe sind gelb bis blau und eignen sich vorzüglich für die verschiedenen Reaktivfärbeverfahren. Man erhält Färbungen auf hydroxylgruppenhaltigen Fasermaterialien, insbesondere Baumwolle, die sich durch hohe Brillanz, Farbstärke, Licht- und Naßechtheiten auszeichnen.

In den folgenden Beispielen beziehen sich Angaben über Teile und Prozente, sofern nicht anders vermerkt, immer auf das Gewicht.

Beispiel 1

Zu 30,3 Teilen salzsauer diazotierter 2-Naphthylamin-4,8-disulfonsäure wird eine neutrale Lösung von 24,4 Teilen des Monoacylierungsproduktes von 1,3-Diaminobenzol und 2-Sulfopropionsäureanhydrid in 240 Teilen Wasser gegeben. Der pH der Mischung wird eine Stunde bei 4 - 5 gehalten, indem nach und nach 90 Teile 10 %iger Sodalösung hinzugefügt werden. Nach beendeter Kupplung wird mit einer feinen Suspension von 18,5 Teilen Cyanurchlorid in 185 Teilen Wasser versetzt und der pH der Mischung durch langsame Zugabe von 48 Teilen 20 %iger Natronlauge zwei Stunden bei 5 gehalten. Danach sind keine diazotierbaren Aminogruppen mehr nachweisbar. Die filtrierte Reaktionslösung wird mit 6 Teilen primärem; 7,1 Teilen sekundärem Natriumphosphat und mit 280 Teilen Kaliumchlorid versetzt. Der ausgesalzene Farbstoff wird schonend getrocknet und färbt Baumwolle in brillanten, sehr gut naß- und lichtechten Goldgelbtönen.

Beispiel 2

Eine nach Beispiel 1 hergestellte Reaktionslösung wird mit 22 Teilen 25 %iger Ammoniaklösung drei Stunden bei 40 - 50 °C umgesetzt. Nach Aussalzen und Trocknen wird ein Farbstoff mit ähnlich guten Eigenschaften wie in Beispiel 1 erhalten.

Beispiel 3

23,9 Teile 2-Amino-5-hydroxynaphthalin-7-sulfonsäure werden in 200 Teilen N-Methylpyrrolidon suspendiert und bei 50 - 80 °C mit 20,5 Teilen 2-Sulfopropionsäureanhydrid acyliert. Es entsteht eine klare Lösung, die in eine Mischung von 200 Teilen Wasser und 200 Teilen Eis eingerührt wird.
33,8 Teile des Kondensationsproduktes aus 18,8 Teilen Cyanurchlorid und 18,8 Teilen 1,3-Phenylendiamin-4-sulfonsäure werden salzsauer diazotiert und zu obiger Lösung gegeben. Man kuppelt bei 0 - 5 °C und einem pH-Wert von 4 - 5 durch Zugabe von 17 Teilen Natriumhydrogencarbonat. Der Farbstoff wird aus neutraler Lösung durch Zugabe von Natriumchlorid gefällt. Man trocknet das Preßgut nach Zusatz von 3,8 Teilen Natriumdihydrogenphosphat und 4,2 Teilen Dinatriumhydrogenphosphat durch Zerstäubung. Man erhält ein orangebraunes Pulver, das Baumwolle in brillanten orange Tönen mit sehr guter Licht- und Naßechtheit färbt.

Beispiel 4

Eine neutrale Lösung von 239 Teilen 2-Amino-5-hydroxynaphthalin-7-sulfonsäure in 1700 Teilen Wasser wird mit 82 Teilen Natriumacetat versetzt. Bei 10 - 20 °C und pH 4 werden 230 Teile ß-Chlorpropionylchlorid zugetropft und über Nacht gerührt. Das Reaktionsprodukt wird durch Zugabe von Natriumchlorid abgeschieden, mit Natriumchloridlösung gewaschen und getrocknet.
32,9 Teile des obigen Kondensationsproduktes werden in 300 Teilen Wasser gelöst. Man versetzt mit 18,9 Teilen Natriumsulfit und hält bei 70 - 80 °C einen pH-Wert von 7 - 7,5 durch Zugabe von Natriumcarbonat. Anschließend wird mit 10 Teilen Wasserstoffsuperoxid versetzt und zwei Stunden gerührt. Die abgekühlte Lösung wird mit 16,4 Teilen Natriumacetat versetzt und 33,8 Teile des salzsauer diazotierten Kondensationsproduktes aus 18,8 Teilen Cyanurchlorid und 18,8 Teilen 1,3-Phenylendiamin-4-sulfonsäure bei pH 4 - 5 mit 17 Teilen Natriumhydrogencarbonat aufgekuppelt. Der Farbstoff wird aus neutraler Lösung durch Zugabe von Natriumchlorid abgeschieden und gefriergetrocknet. Man erhält einen Farbstoff, der in Konstitution und Eigenschaften dem in Beispiel 3 genannten entspricht.

Beispiel 5

Versetzt man das in Beispiel 3 oder 4 erhaltene Kupplungsgemisch mit 25 Teilen conc. Ammoniak bei 50 °C, so erhält man einen Farbstoff mit ähnlich guten Eigenschaften.

Die in Beispiel 3 - 5 genannten Farbstoffe entsprechen der allgemeinen Formel

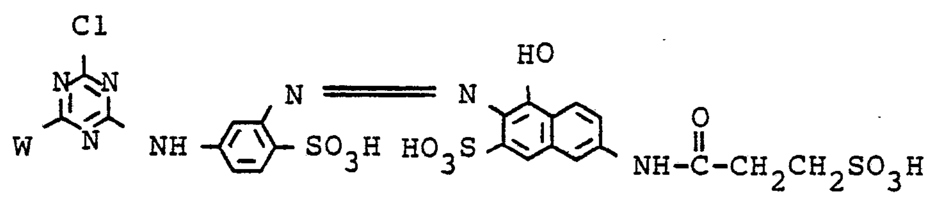

in der W Chlor bzw. $NH_2$ bedeutet. Weitere Farbstoffe, die nach einem der oben beschriebenen Wege erhalten werden können, und die obiger Formel entsprechen, sind in Tabelle 1 zusammengefaßt.

Tabelle 1

| Bsp. | W | Farbton |
|---|---|---|
| 6 | 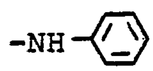 | orange |
| 7 | 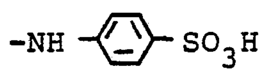 | " |
| 8 | 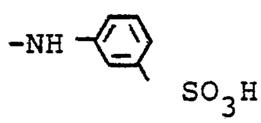 | " |
| 9 | 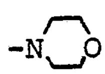 | " |
| 10 | $-NHC_2H_4OC_2H_4OC_2H_4OH$ | " |

Beispiel 11

32,9 Teile des Kondensationsproduktes aus 23,9 Teilen 2-Amino-5-hydroxynaphthalin-7-sulfonsäure und 20,5 Teilen Sulfopropionsäureanhydrid werden in 200 Teilen Wasser neutral gelöst. Man versetzt zunächst mit 16,4 Teilen Natriumacetat, anschließend mit 37 Teilen des salzsauer diazotierten Kondensationsproduktes aus 18,8 Teilen 1,3-Phenylendiamin-4-sulfonsäure und 24 Teilen Tetrachlorpyrimidin und kuppelt bei 0 - 5 °C und einem pH-Wert von 5 - 6. Der ausgefallene Farbstoff wird abgesaugt und getrocknet. Man erhält ein orangebraunes Pulver, das Baumwolle in brillanten orange Tönen mit guter Naßechtheit färbt.

Beispiel 12

Setzt man anstelle der in Beispiel 5 verwendeten 1,3-Phenylendiamin-4-sulfonsäure 26,8 Teile 1,3-Phenylendiamin-4,6-disulfonsäure ein, so erhält man einen Farbstoff, der Baumwolle in brillanten orange Tönen mit sehr guter Naßechtheit färbt.

Beispiel 13

33,7 Teile des Kondensationsproduktes aus 23,9 Teilen 2-Amino-5-hydroxynaphthalin-7-sulfonsäure und 14,5 Teilen Maleinsäureanhydrid werden in wäßriger Lösung bei 50 - 70 °C und pH 7 bis 7,5 mit 25,2 Teilen Natriumsulfit umgesetzt. Anschließend werden 15 Teile Wasserstoffsuperoxid zugegeben und zwei Stunden gerührt. Zur abgekühlten Lösung gibt man 16,4 Teile Natriumacetat und 33,8 Teile einer salzsauer diazotierten Suspension des Kondensationsproduktes aus 18,8 Teilen Cyanurchlorid und 18,8 Teilen 1,3-Phenylendiamin-4-sulfonsäure und kuppelt bei 0 - 5 °C und einem pH-Wert von 5 - 5,5. Aus neutraler Lösung wird der Farbstoff durch Zugabe von Kaliumchlorid abgeschieden und schonend getrocknet. Man erhält ein dunkeloranges Pulver, das Baumwolle in brillanten orange Tönen mit guter Licht- und Naßechtheit färbt.

Beispiel 14

Einen Farbstoff mit ähnlich guten Eigenschaften erhält man, wenn man die in Beispiel 13 hergestellte Reaktionslösung mit 25 Teilen conc. Ammoniak bei 50 °C umsetzt.

Beispiel 15

35,1 Teile des Kondensationsproduktes aus 23,9 Teilen 2-Amino-5-hydroxynaphthalin-7-sulfonsäure und 22,4 Teilen Citraconsäureanhydrid werden in neutraler Lösung bei einer Temperatur von 50 - 70 °C mit 25,2 Teilen Natriumsulfit umgesetzt. Man fügt 15 Teile Wasserstoffsuperoxid zu und rührt 2 Stunden. Die Reaktionslösung wird mit Eis auf 0 - 5 °C abgekühlt und mit 16,4 Teilen Natriumacetat versetzt. Man fügt 33,8 Teile einer salzsauer diazotierten Suspension des Kondensationsproduktes aus 18,8 Teilen Cyanurchlorid und 18,8 Teilen 1,3-Phenylendiamin-4-sulfonsäure zu und kuppelt bei 0 - 5 °C und einem pH-Wert von 5 - 6. Das Reaktionsgemisch wird neutralisiert und der Farbstoff durch Zugabe von Kaliumchlorid ausgefällt. Das Preßgut wird gefriergetrocknet. Man erhält ein orangebraunes Pulver, das Baumwolle in brillanten orange Tönen mit guter Naßechtheit färbt.

Beispiel 16

23,9 Teile 2-Amino-5-hydroxynaphthalin-7-sulfonsäure werden in 200 Teilen N-Methylpyrrolidon suspendiert und bei 40 bis 60 °C 18,5 Teile Crotonsäurechlorid zugetropft. Es entsteht eine klare Lösung. Man versetzt mit 300 Teilen Wasser und 37,8 Teilen Natriumsulfit und rührt bei 70 - 90 °C und einem pH-Wert von 7 - 8 bis zur vollständigen Umsetzung. Anschließend wird mit 30 Teilen Wasserstoffsuperoxid versetzt und 2 Stunden gerührt. Zur abgekühlten Lösung gibt man 16,4 Teile Natriumacetat und 33,8 Teile einer salzsauer diazotierten Suspension des Kondensationsproduktes aus 18,8 Teilen Cyanurchlorid und 18,8 Teilen 1,3-Phenylendiamin-4-sulfonsäure zu und kuppelt bei 0 - 5 °C und einem pH-Wert von 5 - 6. Aus dem neutralisierten Reaktionsgemisch wird der Farbstoff durch Zugabe von Natriumchlorid ausgefällt und schonend getrocknet. Man erhält ein orangebraunes Pulver, das Baumwolle in brillanten orange Tönen mit guter Naßechtheit färbt.

Beispiel 17

Versetzt man das in Beispiel 16 erhaltene Kupplungsgemisch mit 25 Teilen conc. Ammoniak bei 50 °C, so erhält man einen Farbstoff mit ähnlichen Eigenschaften.

Beispiel 18

Verwendet man anstelle der Diazokomponente in Beispiel 16 die salzsauer diazotierte Suspension des sekundären Kondensationsproduktes aus 18,8 Teilen Cyanurchlorid, 18,8 Teilen 1,3-Phenylendiamin-4-sulfonsäure und 10,7 Teilen N-Methylanilin, so erhält man einen Farbstoff mit ähnlichen Eigenschaften.

Beispiel 19

Versetzt man das in Beispiel 16 erhaltene Kupplungsgemisch mit 200 Teilen einer neutralen Lösung von 17 Teilen Anilin-3-sulfonsäure in Wasser bei 50 °C und einem pH-Wert von 6, so erhält man einen Farbstoff mit ähnlichen Eigenschaften.

Beispiel 20

Verwendet man anstelle der Diazokomponente in Beispiel 16 die salzsauer diazotierte Suspension des sekundären Kondensationsproduktes aus 18,8 Teilen Cyanurchlorid, 18,8 Teilen 1,3-Phenylendiamin-4-sulfonsäure und 17 Teilen Anilin-4-sulfonsäure, so erhält man einen Farbstoff mit ähnlichen Eigenschaften.

Beispiel 21

Versetzt man das in Beispiel 16 erhaltene Kupplungsgemisch mit 9,5 Teilen Anilin bei 50 °C und einem pH-Wert von 6, so erhält man einen Farbstoff mit ähnlichen Eigenschaften.

Beispiel 22

72,2 Teile des Farbstoffs aus Beispiel 4 werden in 1000 Teilen Wasser angerührt und mit 12,2 Teilen 4,4'-Diaminodiphenylsulfonamid versetzt und bei 50 °C und einem pH-Wert von 6 bis zur vollständigen Umsetzung gerührt. Aus neutraler Lösung wird der ausgefallene Farbstoff abgesaugt und getrocknet. Man erhält ein orangebraunes Pulver, das Baumwolle in brillanten orange Tönen mit guter Lichtechtheit färbt.

Beispiel 23

23,9 Teile 2-Amino-8-hydroxynaphthalin-6-sulfonsäure werden in 250 Teilen N-Methylpyrrolidon suspendiert und bei 50 - 80 °C mit 20,5 Teilen 2-Sulfopropionsäureanhydrid acyliert. Es entsteht eine klare Lösung, die in eine Mischung von 200 Teilen Wasser und 200 Teilen Eis eingerührt wird.

33,8 Teile des Kondensationsproduktes aus 18,8 Teilen Cyanurchlorid und 18,8 Teile 1,3-Phenylendiamin-4-sulfonsäure werden salzsauer diazotiert und zu obiger Lösung gegeben. Man kuppelt bei 0 - 5 °C und einem pH-Wert von 6 durch Zugabe von 20,5 Teilen Natriumhydrogencarbonat. Der Farbstoff wird aus neutraler Lösung durch Zugabe von Natriumchlorid ausgefällt und gefriergetrocknet. Man erhält ein rotbraunes Pulver, das Baumwolle in brillanten scharlachroten Tönen mit sehr guter Naß- und Lichtechtheit färbt.

Beispiel 24

Versetzt man das in Beispiel 23 erhaltene Kupplungsgemisch mit 25 Teilen conc. Ammoniak bei 50 °C, so erhält man einen Farbstoff mit ähnlich guten Eigenschaften.

Die in Beispiel 23 und 24 genannten Farbstoffe entsprechen der allgemeinen Formel

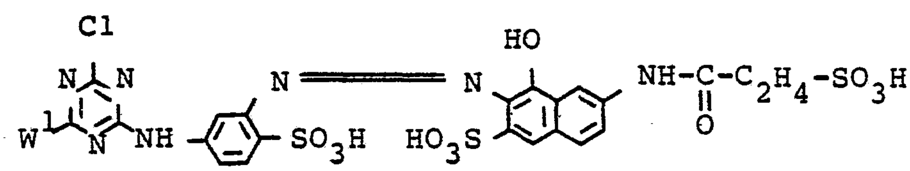

in der $W^1$ Chlor bzw. $NH_2$ bedeuten. Weitere Farbstoffe, die auf oben beschriebene Wege erhalten werden können, und die obiger Formel entsprechen, sind in Tabelle 2 zusammengefaßt.

Tabelle 2

| Bsp. | $W^1$ | Farbton |
|---|---|---|
| 25 | 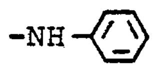 | scharlachrot |
| 26 | 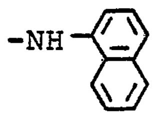 | " |
| 27 | 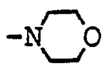 | " |
| 28 | 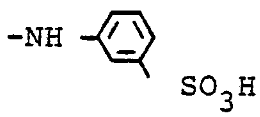 | " |
| 29 | 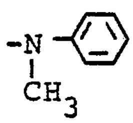 | " |
| 30 | 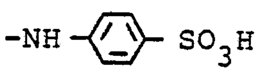 | " |
| 31 | $-NH-C_2H_4-OC_2H_4-OC_2H_4OH$ | " |
| 32 | 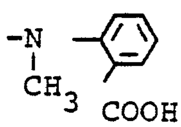 | " |

Beispiel 33

33,7 Teile des Kondensationsproduktes aus 23,9 Teilen 2-Amino-8-hydroxynaphthalin-6-sulfonsäure und 11 Teilen Maleinsäureanhydrid werden in wäßriger Lösung bei 50 - 80 °C und einem pH-Wert von 7 bis 7,5 mit 37,8 Teilen Natriumsulfit umgesetzt. Danach werden 30 Teile Wasserstoffperoxid zugefügt und zwei Stunden gerührt. Zur abgekühlten Lösung gibt man 8,2 Teile Natriumacetat und 33,8 Teile einer salzsauer diazotierten Suspension des Kondensationsproduktes aus 18,8 Teilen Cyanurchlorid und 18,8 Teilen 1,3-Phenylendiamin-4-sulfonsäure und kuppelt bei 0 - 5 °C und einem pH-Wert von 5 bis 5,5. Aus neutraler Lösung wird der Farbstoff durch Zugabe von Natriumchlorid abgeschieden und durch Zerstäuben getrocknet. Man erhält ein rotes Pulver, das Baumwolle in brillanten scharlachroten Tönen mit sehr guter Licht- und Naßechtheit färbt.

Beispiel 34

32,9 Teile 2-ß-Chlorpropionylamino-8-hydroxynaphthalin-6-sulfonsäure werden in 400 Teilen Wasser gelöst und mit 25,2 Teilen Natriumsulfit versetzt. Man rührt bei 70 - 80 °C und einem pH-Wert von 7 bis 8. Danach werden 15 Teile Wasserstoffsuperoxid zugefügt und weitere zwei Stunden gerührt. Zum abgekühlten Reaktionsgemisch werden zunächst 8,2 Teile Natriumacetat, anschließend 37 Teile des salzsauer diazotierten Kondensationsproduktes aus 18,8 Teilen 1,3-Phenylendiamin-4-sulfonsäure und 24 Teilen Tetrachlorpyrimidin gegeben und bei 0 - 5 °C und einem pH-Wert von 6 gekuppelt. Der ausgefallene Farbstoff wird getrocknet. Man erhält ein braunrotes Pulver, das Baumwolle in brillanten scharlachroten Tönen mit guter Naßechtheit färbt.

Beispiel 35

45,5 Teile 1-ß-Sulfopropionylamino-8-hydroxynaphthalin-3,6-disulfonsäure werden in 400 Teilen Wasser gelöst und mit 16,4 Teilen Natriumacetat versetzt. Man fügt 33,8 Teile des Kondensationsproduktes aus 18,8 Teilen Cyanurchlorid und 18,8 Teilen 1,3-Phenylendiamin-4-sulfonsäure zu und kuppelt bei 0 - 5 °C und einem pH-Wert von 4 bis 5. Der Farbstoff wird aus neutraler Lösung durch Zugabe von Kaliumchlorid abgeschieden und gefriergetrocknet. Man erhält ein rotes Pulver, das Baumwolle in brillanten blaustichig roten Tönen mit guter Naßechtheit färbt.

Beispiel 36

Versetzt man das in Beispiel 35 erhaltene Kupplungsgemisch mit 25 Teilen conc. Ammoniak bei 50 °C, so erhält man einen Farbstoff mit ähnlichen Eigenschaften.

Die in Beispiel 35 und 36 genannten Farbstoffe entsprechen der allgemeinen Formel

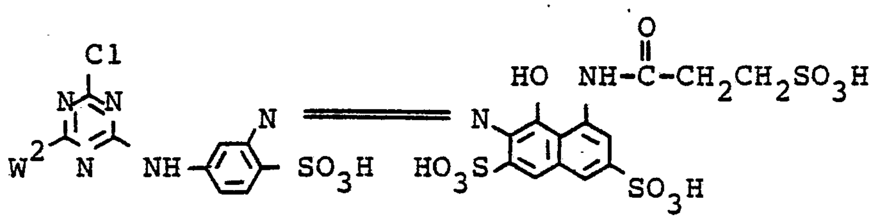

in der $W^2$ Chlor bzw. $NH_2$ bedeuten. Weitere Farbstoffe, die auf oben beschriebenem Wege erhalten werden können, und die obiger Formel entsprechen, sind in Tabelle 3 zusammengefaßt.

Tabelle 3

| Bsp. | $W^2$ | Farbton | |
|---|---|---|---|
| 37 | 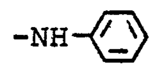 | blaustichig | rot |
| 38 | 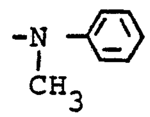 | " | " |
| 39 | 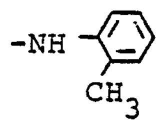 | " | " |
| 40 | 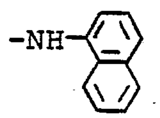 | " | " |
| 41 | 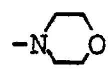 | " | " |
| 42 | 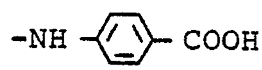 | " | " |
| 43 | 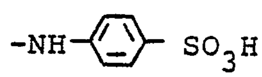 | " | " |
| 44 | 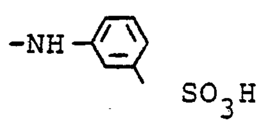 | " | " |
| 45 | 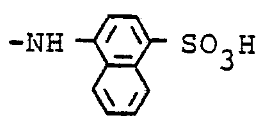 | " | " |

Beispiel 46

Das aus 30,3 Teilen mineralsauer diazotierter 2-Naphthylamin-4,8-disulfosäure und 24,4 Teilen des Monoacylierungsproduktes aus 1,3-Diaminobenzol und 2-Sulfopropionsäureanhydrid erhaltene Kupplungsprodukt des Beispiels 1 wird mit 7 Teilen Natriumnitrit und 160 Teilen 5N-Salzsäure drei Stunden bei 20 °C diazotiert. Nach Zerstörung des Nitritüberschusses mit Amidosulfonsäure werden 22,3 Teile Clevesäure-6 in Form einer neutralen wäßrigen Lösung hinzugefügt. Durch sukzessive Zugabe von 95 Teilen 20 %iger Natronlauge wird die Kupplung bei pH 5 zu Ende geführt. Dann wird eine feine Suspension von 27 Teilen Cyanurchlorid in 270 Teilen Eiswasser hinzugefügt und mit 50 Teilen 20 %iger Natronlauge pH 6 gehalten, bis sich keine freien Aminogruppen mehr nachweisen lassen. Nach Zugabe von 12 Teilen primären und 14 Teilen sekundären Natriumphosphates wird mit 200 Teilen Kaliumchlorid ausgesalzen, und der erhaltene Farbstoff schonend getrocknet. Er färbt Baumwolle in lichtechten braunorange Tönen.

Beispiel 47

Zu einer salzsauer diazotierten Lösung von 24,4 Teilen 3-(ß-Sulfopropionylamino)-anilin werden 250 Teile einer neutralen Lösung von 30,7 Teilen 1-Amino-8-hydroxynaphthalin-3,6-disulfonsäure getropft und bei pH 2 bis 3 über Nacht gekuppelt. Zur Suspension des gebildeten dunkelroten Monoazofarbstoffs wird die salzsauer diazotierte Suspension von 33,8 Teilen des Konden-

sationsproduktes aus 18,8 Teilen Cyanurchlorid und 18,8 Teilen 1,3-Phenylendiamin-4-sulfonsäure gegeben und bei 5 - 10 °C und einem pH-Wert von 7 gekuppelt. Zur Reaktionsmischung des Diazofarbstoffes fügt man 25 Teile conc. Ammoniak zu und rührt 3 Stunden bei 50 °C. Aus neutraler Lösung wird der Farbstoff durch Zugabe von Natriumchlorid abgeschieden und getrocknet. Man erhält ein schwarzes Pulver, das Baumwolle in marineblauen Tönen mit guter Naßechtheit färbt.

Der in Beispiel 47 beschriebene Farbstoff entspricht der allgemeinen Formel

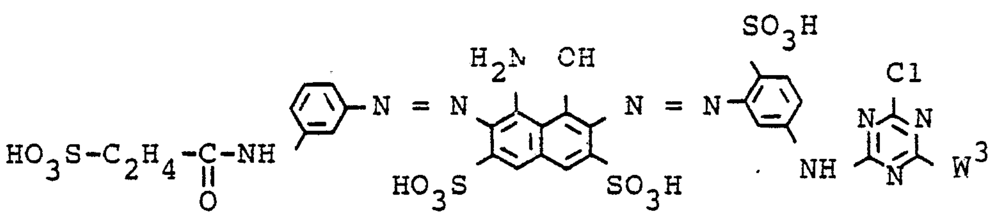

in der $W^3$ $NH_2$ bedeutet.

Weitere Farbstoffe, die auf oben beschriebenem Wege erhalten werden können, sind in Tabelle 4 zusammengefaßt.

Tabelle 4

| Bsp. | $W^3$ | Farbton |
|---|---|---|
| 48 | Cl | marineblau |
| 49 | 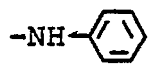 | " |
| 50 | 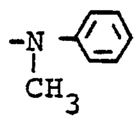 | " |
| 51 | 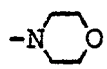 | " |
| 52 | 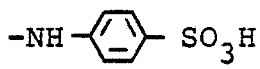 | " |
| 53 | 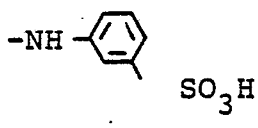 | " |
| 54 | 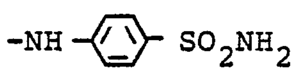 | " |
| 55 | 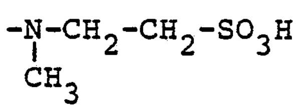 | " |
| 56 | 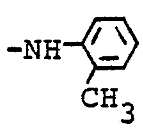 | " |

Beispiel 57

32,9 Teile des Kondensationsproduktes aus 23,9 Teilen 2-Amino-5-hydroxynaphthalin-7-sulfonsäure und 20,5 Teilen Sulfopropionsäureanhydrid werden in 200 Teilen Wasser neutral gelöst. Man versetzt zunächst mit 17 Teilen Natriumacetat, anschließend mit 39 Teilen des salzsauer diazotierten sekundären Kondensationsproduktes aus 10,9 Teilen o-Toluidin, 14,1 Teilen Cyanurfluorid und 18,8 Teilen 1,3-Phenylendiamin-4-sulfonsäure und kuppelt bei 0 bis 5°C und einem pH-Wert von 5 bis 5,5. Der Farbstoff wird aus neutraler Lösung mit Kaliumchlorid abgeschieden und gefriergetrocknet. Man erhält ein orangefarbenes Pulver, das Baumwolle in brillanten orangen Tönen mit guter Licht- und Naßechtheit färbt.

Beispiel 58

Ersetzt man das in Beispiel 57 verwendete Kondensationsprodukt aus 2-Amino-5-hydroxynaphthalin-7-sulfonsäure und Sulfopropionsäureanhydrid durch 23,9 Teile des Kondensationsproduktes aus 2-Amino-8-hydroxynaphthalin-6-sulfosäure und 20,5 Teilen Sulfopropionsäureanhydrid und kuppelt bei einem pH-Wert von 6, so erhält man einen Farbstoff, der Baumwolle in brillanten scharlachroten Tönen mit guter Naßechtheit färbt.

Beispiel 59

23,9 Teile 2-Amino-8-hydroxynaphthalin-6-sulfonsäure werden in 200 Teilen N-Methylpyrrolidon suspendiert und bei 40 bis 60°C 17,5 Teile Crotonsäurechlorid zugetropft. Es entsteht eine klare Lösung. Man fügt 400 Teile Wasser und 37,8 Teile Natriumsulfit zu und rührt bei 70 bis 80°C bis zur vollständigen Umsetzung. Anschließend wird mit

30 Teilen Wasserstoffsuperoxid versetzt und 2 Stunden gerührt. Zur abgekühlten Lösung gibt man 16,4 Teile Natriumacetat und 33,8 Teile des salzsauer diazotierten Kondensationsproduktes aus 18,8 Teilen Cyanurchlorid und 18,8 Teilen 1,3-Phenylendiamin-4-sulfonsäure und kuppelt bei 0 bis 5°C und einem pH-Wert von 6. Aus dem neutralisierten Reaktionsgemisch wird der Farbstoff durch Zugabe von Natriumchlorid abgeschieden und gefriergetrocknet. Man erhält ein dunkelrotes Pulver, das Baumwolle in brillanten scharlachroten Tönen mit guter Licht- und Naßechtheit färbt.

## Patentansprüche

1. Reaktivstoffe der allgemeinen Formel I

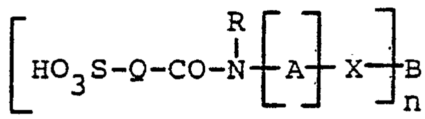

sowie deren Metallkomplexe, wobei

B für n = 1 Fluor oder Chlor und für n = 2 ein Brückenglied,

A der Rest eines Mono- oder Disazofarbstoffes,

n 1 oder 2,

Q gegebenenfalls durch Chlor, Brom, Carboxyl, Methyl oder Phenyl substituiertes Alkylen,

R Wasserstoff oder gegebenenfalls substituiertes Alkyl oder Cycloalkyl und

X ein faserreaktiver Rest der Triazin-, Pyrimidin- oder Chinoxalinreihe sind, mit der Maßgabe, daß X für n = 2 ein Triazinrest ist.

2. Farbstoffe gemäß Anspruch 1, wobei n = 1 und B Fluor oder Chlor sind.

3. Farbstoffe gemäß Anspruch 1, wobei n = 1 und B Chlor sind.

4. Farbstoffe gemäß Anspruch 1, wobei A der Rest eines Monoazofarbstoffes ist.

5. Farbstoffe gemäß Anspruch 1, wobei A der Rest eines Monoazofarbstoffes der Arylazoaryl-Reihe ist.

6. Farbstoffe gemäß Anspruch 1, wobei Q $C_2H_4$, $CHCH_2$,
$CH_3$

$CHCH_2$ oder $CHCH_2$ ist
$COOH$ $C_6H_5$

7. Farbstoffe gemäß Anspruch 1, wobei R Wasserstoff oder $C_1$- bis $C_4$-Alkyl ist.

8. Farbstoffe gemäß Anspruch 1, wobei die Metallkomplexe Fe-, Cu-, Co- oder Cr-Verbindungen sind.

9. Verwendung der Farbstoffe gemäß Anspruch 1 zum Färben hydroxylgruppenhaltiger Fasern, insbesondere von Baumwolle.